# EUROPEAN PATENT APPLICATION

(11) **EP 3 438 481 A1**
(43) Date of publication of application: **06.02.2019**
(21) Application number: 16896830.3
(22) Date of filing: 30.03.2016
(51) Int. Cl.: F16C 19/38, F16C 33/58

(54) **COMBINED CYLINDRICAL ROLLER BEARING**

(71) Applicant: Harmonic Drive Systems Inc., Shinagawa-ku Tokyo 140-0013 (JP)
(72) Inventor: HAGIWARA Tsuguhisa, Azumino-shi Nagano 399-8305 (JP); NAKAZAWA Yoshiji, Matsumoto-shi Nagano 390-1243 (JP); TAGUCHI Kazuhisa, Matsumoto-shi Nagano 390-1243 (JP); KURASHINA Kazuhiko, Matsumoto-shi Nagano 390-1243 (JP)
(74) Representative: TBK
(86) International application number: PCT/JP2016/060320
(87) International publication number: WO 2017/168610

(57) **Abstract**

A combined cylindrical roller bearing (1) is provided with first and second angular cylindrical roller bearings (10, 20) coaxially disposed in parallel, and a shim plate (3) sandwiched between first and second inner races (12, 22) of these angular cylindrical roller bearings. A gap between the first and second inner races (12, 22) is adjusted by the shim plate (3). First and second cylindrical rollers (14, 24) do not have the relative positions thereof restricted in the direction of the bearing center axis line (1a) thereof. Pressurization of the first and second angular cylindrical roller bearings (10, 20) can be managed appropriately by the shim plate (3). Different from double-row angular cylindrical roller bearings, it is not required to raise the precision in processing and assembly of the inner and outer races to the tolerance level of cylindrical rollers, processing and assembly can be made easy, and cost can be reduced.

## Description

### TECHNICAL FIELD

The present invention relates to a combined cylindrical roller bearing that has high rigidity and is easy to process and assemble.

### BACKGROUND ART

The double-row angular cylindrical roller bearings disclosed in patent documents 1 and 2 are well known as cylindrical roller bearings having high rigidity. In a double-row angular cylindrical roller bearing, two roller raceways are formed between inner and outer races, and a cylindrical roller disposed at an incline at an angle of 45° in one direction is rollably inserted into each of the roller raceways. Between the cylindrical roller inserted into one roller raceway and the cylindrical roller inserted into the other roller raceway, the directions of inclination are opposite, and the roller center axes are orthogonal to each other.

A double-row angular cylindrical roller bearing is capable of receiving both an axial load acting along a direction parallel to the bearing center axis and a radial load acting along a bearing radial direction. In addition, a double-row angular cylindrical roller bearing has greater rigidity and a greater load capacity than does a cross-roller bearing having the same outside diameter.

### PRIOR ART DOCUMENT

### PATENT DOCUMENT

Patent Document 1: JP 5-44720 A
Patent Document 2: WO 2009/020087

### SUMMARY OF THE INVENTION

### PROBLEMS TO BE SOLVED BY THE INVENTION

In a double-row angular cylindrical roller bearing, an outer-race-side raceway surface and an inner-race-side raceway surface, which define the roller raceways formed in the inner and outer races, are inclined by 45° relative to the bearing center axis. Therefore, in a state where cylindrical rollers are inserted into the two roller raceways, the cylindrical rollers inserted into the left and right roller raceways are sandwiched from the direction of the bearing center axis by the outer-race-side raceway surface and the inner-race-side raceway surface. Specifically, the relative positions of the two rows of cylindrical rollers in the direction of the bearing center axis are restricted.

Therefore, in a state where the cylindrical rollers are inserted and the inner and outer races are put together, it is necessary for each of a pair of inner-race-side raceway surfaces and a pair of outer-race-side raceway surfaces to face each other with high precision in the direction of the bearing center axis. For this purpose, deviation of the inner- and outer-race raceway surfaces in the direction of the bearing center axis line must be kept to no greater than several microns, which is the level of variation in the roller diameter of the cylindrical rollers. Accordingly, processing and putting together of the inner and outer races must be performed with high precision, and the manufacturing costs also increase.

When the deviation in the direction of the bearing center axis line between the inner-race raceway surfaces and outer-race raceway surfaces is large due to, *inter alia,* error in processing the inner and outer races, problems are presented in that it is difficult to assemble the bearings, excessive force is applied to the raceway surfaces or cylindrical rollers, friction torque at sliding portions of the raceway surfaces and cylindrical rollers increases, and variation in bearing performance also increases.

In the prior art, cylindrical rollers having a smaller diameter than in the case of a cross roller bearing of the same size are employed in order to avoid such problems. Therefore, the rated load of the bearings is low.

In view of such issues, an object of the present invention is to provide a combined cylindrical roller bearing with which it is possible to solve the aforementioned problems in conventional double-row angular cylindrical roller bearings.

### MEANS OF SOLVING THE PROBLEMS

A combined cylindrical roller bearing of the present invention is characterized by having:
first and second angular cylindrical roller bearings coaxially disposed in parallel, and
an interval adjustment plate disposed between the first and second angular cylindrical roller bearings;
in the first angular cylindrical roller bearing, a plurality of first cylindrical rollers are rollably inserted into a single first roller raceway formed between a first outer race and a first inner race;
in the second angular cylindrical roller bearing, a plurality of second cylindrical rollers are rollably inserted into a single second roller raceway formed between a second outer race and a second inner race; and
where end surfaces of the first and second outer races that face each other from a direction of a bearing center axis line are respectively designated as first and second outer race end surfaces, and end surfaces of the first and second inner races that face each other from the direction of the bearing center axis line are respectively designated as first and second inner race end surfaces,
one pair from among the first and second outer race end surfaces and the first and second inner race end surfaces abut each other from the direction of the bearing center axis line, and the interval adjustment plate is sandwiched between the other pair.

In the combined cylindrical roller bearing of the present invention, the first and second angular cylindrical roller bearings are constructed so as to be coaxially disposed in parallel. In the angular cylindrical roller bearings, the positions of the cylindrical rollers in the direction of the bearing center axis line are fixed by orthogonal inclined raceway surfaces defining roller raceways of each of the inner and outer races.

The relative positional relationship between the first cylindrical roller inserted into the first roller raceway of the first angular cylindrical roller bearing and the second cylindrical roller inserted into the second roller raceway of the second angular cylindrical roller bearing is, in the direction of the bearing center axis lines thereof, not fixed (not restricted). Specifically, a gap between the first and second outer races or a gap between the first and second inner races is adjusted by the interval adjustment plate, and a state where the cylindrical rollers are inserted into the roller raceways in an appropriate state is achieved in each of the angular cylindrical roller bearings. Adjusting the gaps using the interval adjustment plate makes it possible to stably manage pressurization.

Thus, according to the combined cylindrical roller bearing of the present invention, the aforementioned problems in double-row angular cylindrical roller bearings can be solved. Specifically, the need to raise the precision of processing and assembly of the inner and outer races to the tolerance level of the cylindrical rollers is obviated, processing and assembly are facilitated, and cost can be reduced. In addition, increases in the friction torque caused by error in the processing or assembly of the inner and outer races, variation in bearing performance, etc., can be suppressed. Furthermore, because the cylindrical rollers do not need to be made smaller, the strength can be kept from decreasing.

In the present invention, when inserting the interval adjustment plate between the first and second inner races and managing pressurization, for example, the first and second outer races are press-fitted and fixed to a circular inner peripheral surface of a bearing case so that the first and second outer race end surfaces thereof abut each other.

### BRIEF DESCRIPTION OF THE DRAWINGS

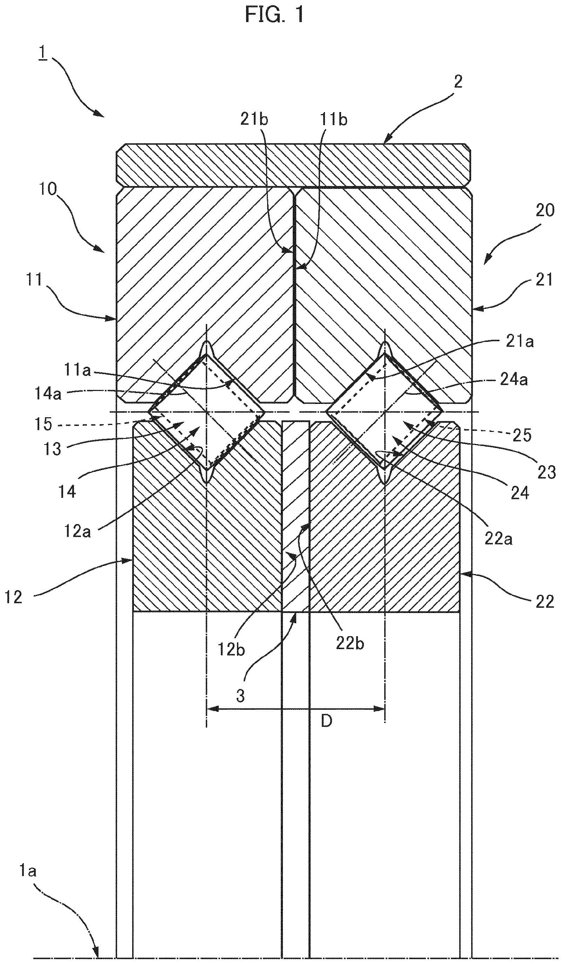

FIG. 1 is a half cross-sectional view of a combined cylindrical roller bearing to which the present invention is applied.

### MODE FOR CARRYING OUT THE INVENTION

An embodiment of a combined cylindrical roller bearing to which the present invention is applied is described below with reference to FIG. 1. The combined cylindrical roller bearing 1 has a bearing case 2 formed in a cylindrical shape. A first angular cylindrical roller bearing 10 and a second angular cylindrical roller bearing 20 are mounted inside the bearing case 2 so as to be coaxially disposed in parallel. A discoid shim plate 3 that is an interval adjustment plate is mounted between the first and second angular cylindrical roller bearings 10 and 20.

The first angular cylindrical roller bearing 10 is provided with a first outer race 11 and a first inner race 12, a single first roller raceway 13 of rectangular cross-section formed between the races, and a plurality of first cylindrical rollers 14 rollably inserted into the first roller raceway 13. Within the first roller raceway 13, a space between first cylindrical rollers 14 adjacent to each other in a circumferential direction is maintained at a fixed interval by a retainer 15. The first angular cylindrical roller bearing 10 can also be configured as a full-complement roller bearing.

The first roller raceway 13 is defined by V-shaped raceway grooves formed in each of the first outer race 11 and the first inner race 12. An outer-race-side raceway surface 11a is formed on one groove-side surface of the outer-race-side V-shaped raceway groove, and an inner-race-side raceway surface 12a is formed on one groove-side surface of the inner-race-side V-shaped raceway groove. The outer-race-side raceway surface 11a and the inner-race-side raceway surface 12a are inclined at an angle of 45° relative to a bearing center axis line 1a. Therefore, the first cylindrical rollers 14 are inserted into the first roller raceway 13 in an orientation such that roller center axis lines 14a thereof are inclined at the same angle of 45° relative to the bearing center axis line 1a.

The second angular cylindrical roller bearing 20 is configured in the same manner as the first angular cylindrical roller bearing 10. The second angular cylindrical roller bearing 20 has a second outer race 21 and a second inner race 22, a single second roller raceway 23 of rectangular cross-section formed between the races, and a plurality of second cylindrical rollers 24 rollably inserted into the second roller raceway 23. Within the second roller raceway 23, a space between second cylindrical rollers 24 adjacent to each other in a circumferential direction is maintained at a fixed interval by a retainer 25. The second angular cylindrical roller bearing 20 can also be configured as a full-complement roller bearing.

The second roller raceway 23 is formed between an outer-race-side raceway surface 21a formed on a circular inner peripheral surface of the second outer race 21 and an inner-race-side raceway surface 22a formed on a circular inner peripheral surface of the second inner race 22. The outer-race-side raceway surface 21a and the inner-race-side raceway surface 22a are inclined at an angle of 45° relative to the bearing center axis line 1a. Therefore, the second cylindrical rollers 24 are inserted into the second roller raceway 23 in an orientation such that roller center axis lines 24a thereof are inclined at the same angle of 45° relative to the bearing center axis line 1a.

In the first and second outer races 11 and 21 of the first and second angular cylindrical roller bearings 10 and 20, a first outer race end surface 11b and a second outer race end surface 21b face each other from the direction of the bearing center axis line 1a. Similarly, in the first and second inner races 12 and 22, a first inner race end surface 12b and a second inner race end surface 22b face each other from the direction of the bearing center axis line 1a.

In the present example, the first and second outer races 11, 21 are press-fitted and fixed to a circular inner peripheral surface of the bearing case 2, and the first and second outer race end surfaces 11b and 21b abut each other in a state of surface contact. In contrast, the width of the first and second inner races 12 and 22 is set so as to be slightly less than that of the first and second outer races 11 and 21. In a state in which the first and second outer races 11 and 21 abut each other, a prescribed gap is formed between the first and second inner race end surfaces 12b and 22b of the first and second inner races 12 and 22.

The first and second angular cylindrical roller bearings 10 and 20 are put together in a state where the shim plate 3 is sandwiched between the first and second inner race end surfaces 12b and 22b. Adjusting the thickness of the shim plate 3 sandwiched between the end surfaces makes it possible to stably manage pressurization with respect to the first and second angular cylindrical roller bearings 10 and 20.

In the combined cylindrical roller bearing 1 having this configuration, the relative positions of the first and second cylindrical rollers 14 and 24 in the direction of the bearing center axis line 1a are not restricted (the inter-center distance D between the first and second cylindrical rollers 14 and 24 is not fixed). However, in the case of a double-row angular cylindrical roller bearing, the relative positions of cylindrical rollers inserted into two roller raceways formed between integrated outer races or inner races in the direction of a bearing center axis line are restricted. Therefore, according to the present invention, the high precision in processing and assembly of components that is needed in the case of a double-row angular cylindrical roller bearing is not required, and therefore it is possible to facilitate the processing and assembly of the components and reduce costs.

Even when the precision in processing and assembling components is raised to the dimensional tolerance of the cylindrical rollers, it is possible to avoid or minimize adverse effects, such as the application of excessive force to the raceway surfaces or cylindrical rollers, increases in friction torque at bearing sliding surfaces, and large variation in bearing performance. Furthermore, the need to avoid the adverse effects described above by reducing the size of the cylindrical rollers is obviated, and therefore it is possible to avoid decreases in the strength of the bearing and realize a bearing having high rigidity and a high rated load.

## Claims

1. A combined cylindrical roller bearing comprising:
first and second angular cylindrical roller bearings coaxially disposed in parallel, and
an interval adjustment plate disposed between the first and second angular cylindrical roller bearings;
wherein, in the first angular cylindrical roller bearing, a plurality of first cylindrical rollers are rollably inserted into a single first roller raceway formed between a first outer race and a first inner race;
in the second angular cylindrical roller bearing, a plurality of second cylindrical rollers are rollably inserted into a single second roller raceway formed between a second outer race and a second inner race; and
where end surfaces of the first and second outer races that face each other from a direction of a bearing center axis line are respectively designated as first and second outer race end surfaces, and end surfaces of the first and second inner races that face each other from the direction of the bearing center axis line are respectively designated as first and second inner race end surfaces,
one pair from among the first and second outer race end surfaces and the first and second inner race end surfaces abut each other from the direction of the bearing center axis line, and the interval adjustment plate is sandwiched between the other pair.

2. The combined cylindrical roller bearing according to claim 1, further comprising:
a bearing case into which the first and second outer races are press-fitted and fixed in a state in which the first and second outer race end surfaces abut each other,
wherein the interval adjustment plate having a discoid shape is sandwiched between the first and second inner race end surfaces of the first and second inner races.
